# EUROPEAN PATENT SPECIFICATION

(11) **EP 0 595 116 B1**
(45) Date of publication and mention of the grant of the patent: **15.05.1996**
(21) Application number: 93116590.6
(22) Date of filing: 14.10.1993
(51) Int. Cl.: F01L 25/08, F01L 23/00

(54) **Fluid pressure operated piston engine assembly**
Anordnung für Druckmittelmotor mit Kolben
Dispositif pour moteur à piston commandé par la pression d'un fluide

(30) Priority: 29.10.1992 US 968447; 26.07.1993 US 96862
(43) Date of publication of application: 04.05.1994
(73) Proprietor: NORDSON CORPORATION, Westlake Ohio 44145-1148 (US)
(72) Inventor: Walsh, John Terence, Duluth, Georgia 30136 (US); Woodlief, Robert J., Lawrenceville, Georgia 30244 (US); Sloan, Patricia Ann, Canton, Georgia 30114 (US)
(74) Representative: Eisenführ, Speiser & Partner

(56) References cited:
- EP-A- 0 480 192
- WO-A-80/00867
- US-A- 4 509 402
- US-A- 4 550 642

## Description

This invention relates generally to a fluid pressure operated piston engine assembly. The invention more particularly concerns such an assembly including a fluid valve for coupling fluid under pressure to alternative portions of the piston chamber of the piston engine so that, as the drive shaft of the piston engine approaches each end of its stroke, fluid under pressure is coupled to a portion of the piston chamber to effect reversal of the direction of travel of the drive shaft, such as known from US-A-4 550 642. It also concerns a shifter assembly for actuating the fluid valve.

In a fluid pressure operated piston engine, a pressurized fluid is used to reciprocate a piston and an attached drive shaft to perform mechanical work. To do this, a pressurized fluid valve is generally interposed between a source of pressurized fluid and the piston chamber of the piston engine to alternatively pressurize and exhaust each end of the piston chamber. As the piston approaches an end of the chamber, and hence as the attached drive shaft approaches an end of its stroke, the valve must be actuated to effect reversal of the direction of travel of the piston and drive shaft.

Typically, in order to do this, some form of mechanical coupling is provided between the drive shaft and the pressurized fluid valve. One known form of fluid pressure operated piston engine, for example, is a pneumatically driven pump, such as may be used for pumping hot melt adhesive. One form of such a pump is described in United States Patent No, 4,550,642 to Langer which also describes various other prior art systems, the disclosure of this patent describing these systems is hereby incorporated herein by reference.

One problem with the heretofore shifter assemblies is that they contain many moving parts, or require mechanical interaction (contact) between parts, or are complicated, etc. All of these, either individually or collectively, can lead to fatigue of the shifter and/or stalling of the pump assembly while also being difficult to trouble shoot.

### SUMMARY OF THE INVENTION

It is an object of the present invention to provide an improved fluid pressure operated piston engine assembly which includes a pressurized fluid valve effectively cooperating with the piston engine to couple fluid under pressure to portions of the piston chamber to effect reversal of the direction of travel of the drive shaft as the drive shaft approaches each end of its stroke, with a means for causing the fluid valve to shift from one position to another when the piston reaches the end of its stroke that is substantially non-contact in nature.

These and other objectives have been accomplished by providing an assembly according to claim 1.

Other objects and advantages of the invention, and the manner of their implementation, will become apparent upon reading the following detailed description and upon reference to the drawings.

### BRIEF DESCRIPTION OF THE DRAWINGS

The following is a brief description of the drawings in which like parts may bear like reference numerals and in which:

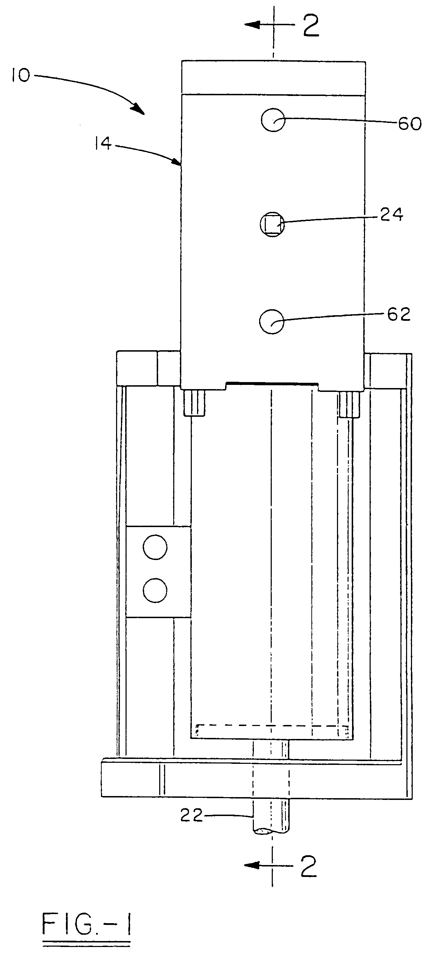

Figure 1 is an elevational view of a fluid pressure operated piston engine assembly in accordance with one embodiment of the invention;
Figure 2 is an elevational view in cross-section, of the assembly of Figure 1 taken substantially along line 2-2 and showing the assembly in a first position;
Figure 3 is the elevational view similar to that of Figure 2, but showing the assembly in its second position;
Figure 4 is an enlarged cross-sectional view of the valve spool and sleeve of the fluid valve corresponding to the position shown in Figure 2;
Figure 5 is an enlarged cross-sectional view of the valve spool and sleeve corresponding to that shown in Figure 3;
Figure 6 is a cross-sectional view of the fork, taken substantially along line 6-6;
Figure 7 is a plane view of an alternate fork for the assembly of Figures 1, 2, and 3; and
Figure 8 is a partial elevational view of an alternate shifter assembly for use with a fluid pressure operated piston engine.

### DESCRIPTION OF THE INVENTION

With reference now to the figures, a fluid pressure operated piston engine assembly, shown generally as reference numeral 10, includes a fluid pressure operated piston engine 12 and a fluid valve 14 for coupling fluid under pressure to the piston engine. The piston engine 12 includes a housing 16 defining a piston chamber 18 in which a piston 20 reciprocates. Attached to, and reciprocable with, the piston 20 is a drive shaft 22. The drive shaft 22 may serve as a pump shaft, for example, if the piston engine 12 is employed as a pump. When employed as a pump, this assembly is especially suited for pumping adhesives, such as for example, hot melt adhesive.

The pressurized fluid valve 14, in the illustrated form, is a pneumatic valve for selectively coupling pressurized air from a pressurized air source (not shown) through an air inlet 24 to the piston chamber 18. A valve spool 26, which serves as a flow-directing valve element, is translatable within a sleeve 28, having a multi-stepped bore mounted within a housing 30 of the fluid valve 14.

In the illustrated form, pressurized air communicates through the inlet 24 into an annulus 32 forming a portion of the bore of the sleeve 28. The pressurized air communicates from the annulus 32 to either annulus 34 or 36 of the bore via reduced diameter portions 38, 40, respectively, of the bore, depending upon the position of the valve spool 26. The outer diameter of the valve spool 26 varies to form stepped portions for directing the flow of pressurized air.

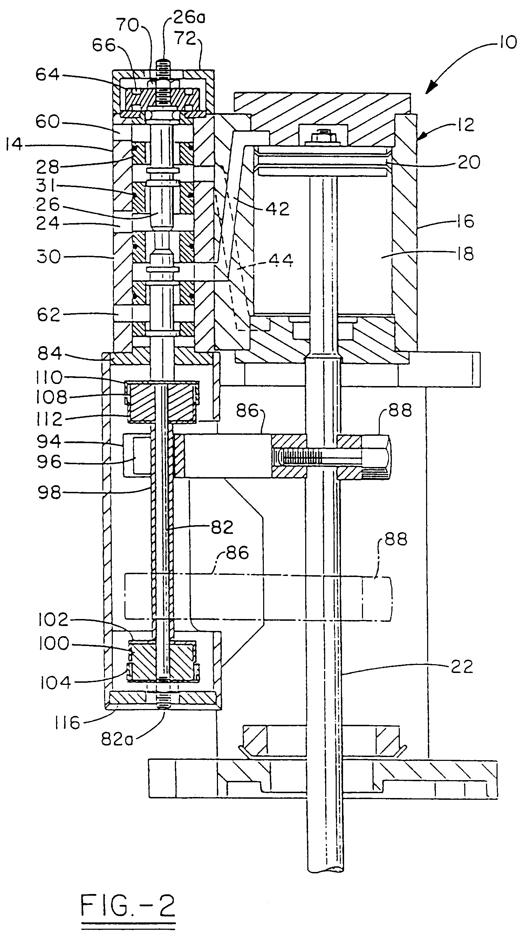

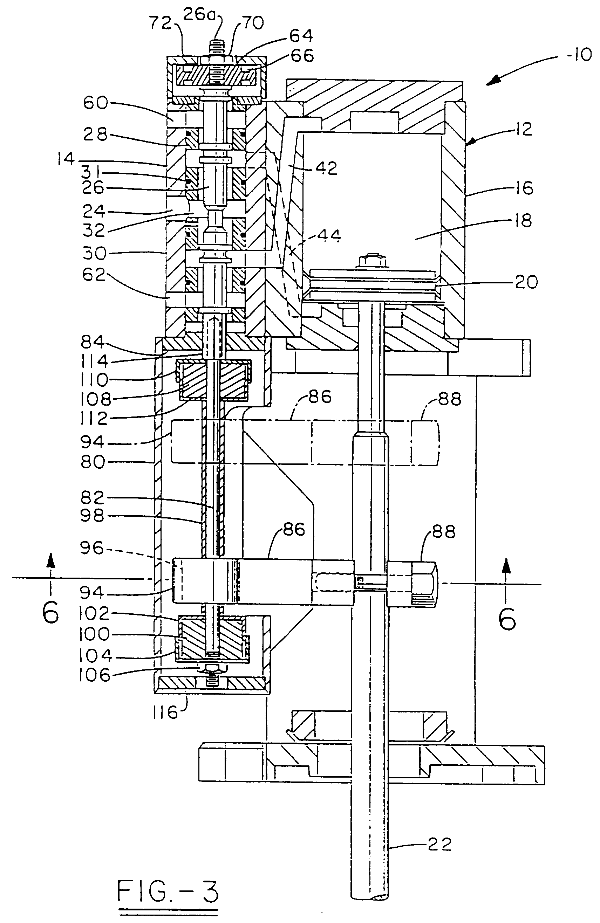

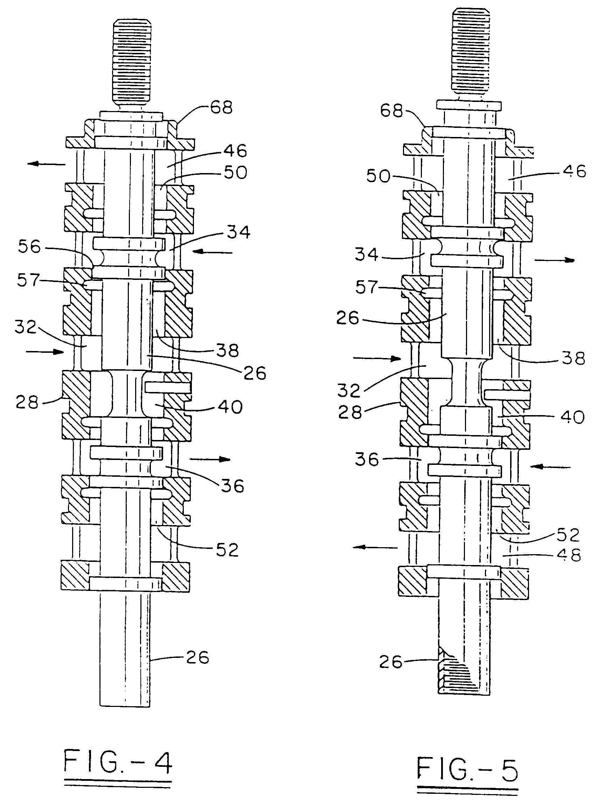

With the valve spool 26 positioned as shown in Figures 2 and 4, the pressurized air is coupled from the air inlet 24, through the annulus 32, portion 40, and annulus 36 of the bore of the sleeve, and through a passageway 42 to the top of the piston chamber 18. When the spool 26 is in the position shown in Figures 3 and 5, the pressurized air is coupled from the air inlet 24, through the annulus 32, portion 38, and annulus 34 of the bore, and through a passageway 44 communicating with the bottom of the piston chamber 18. Passageways 42 and 44 are shown in a diagonal or crossing pattern for clarity, however, they could both extend substantially in the vertical direction with respect to Figure 2.

An exhaust annulus 46 of the bore of the sleeve 28 is couple to the annulus 34 via a reduced diameter portion 50. In like manner, as exhaust annulus 48 of the bore is coupled to the annulus 36 via a reduced diameter portion 52. As before, the flow of air between each pair of annuluses 34,46; 36,48 is dependent upon the position of the valve spool 26. Each exhaust annulus is coupled to an opening in the housing 30 of the fluid valve so that air may be vented from the piston chamber as the piston moves from one end of the chamber to the other.

In order to reciprocate the piston 20 and the drive shaft 22, and, for reference, referring initially to the positions of the valve spool 26 and piston 20 shown in Figure 2, the pressurized air is coupled through the inlet 24 and the annulus 32. The air passes through the reduce diameter portion 40 to annulus 36, but is prevented from passing to annulus 34 by a larger diameter portion 56 of the valve spool 26. From annulus 36 the air passes through the passageway 42 to the upper portion of the piston chamber 18. The pressurized air acts upon the upper face of the piston 20, forcing the piston and the drive shaft 22 downwardly. As the piston 20 moves downwardly, the air in the lower portion of the chamber 18 is exhausted through the passageway 44 to the annulus 34, through the reduced diameter portion 50, annulus 46, and then the exhaust opening 60 in the top of the valve housing 30 were upon the air is vented out of the assembly.

In a manner to be described further below, when the piston 20 nears the bottom of the chamber 18, the valve spool 26 is slideably moved within the sleeve. With reference to Figures 2 and 4, the valve spool 26 will be moved upwardly to the position shown in Figures 3 and 5. This causes the various different portions of the stepped outer diameter of the valve spool 26 to align differently with the stepped bore of the sleeve 28, thereby causing the air flow path to be redirected along a different flow path. Pressurized air is then coupled through the fluid valve 14 so that the pressurized air is coupled to the passageway 44 to act upon the lower face of the piston 20. The thus-applied force on the lower face of the piston 20 drives the piston back to the top of the chamber 18, whereupon the fluid valve 14 is again slideably moved to its previous position of Figures 2 and 4. The cycle is then repeated. During the time that the piston 20 moves upwardly through the chamber 18, the air in the upper portion of the chamber is exhausted through the passageway 42, annulus 36, portion 52, annulus 48 and finally out of the opening 62 in the bottom of the valve housing 30.

Attached to the upper end of the valve spool 26 is a stop plate 64 having a pair of rings 66. The stop plate 64 is held by the upper shoulder 68 of the spool valve and by a nut 70 threadably attached to the upper end of the spool valve 26. .The stop plate 64 provides a detent for limiting the travel of the spool valve 26 as it slideably moves within the bore of the sleeve 28. With reference to Figure 3, the stop plate 64 limits the upward travel of the spool by interacting with the cap portion 72 of the hosing 30 of the fluid valve. The rings 66 are somewhat resilient so that they act similar to a shock absorber. The rings may be, for example, comprised of an elastomer, Tetrafluoroethylene, or other material.

To insure that the air valve is resistant to the formation of deposits within the air valve, it is preferred that the outer stepped portion of the spool, such as the larger diameter portion 56, wipes across the bore, of the housing, such as reduced diameter portion 38. Deposits will then be wiped into the larger portions, such as 34 of the bore or various pockets 57.

Normal valve design tolerances for a half inch diameter spool (as measured at the larger diameter portions, such as 56) are 2,5 × 10⁻³ mm (±.0001 inches). However, for pump assemblies for use in hot melt dispensing systems, it has been found that spools and sleeves manufactured to this tolerance had a tendency to gum up and stick, while those manufactured to ± 0,025 mm (±.001 inches) tended to leak. Therefore, the preferred tolerance lies somewhere there between. Good results have been obtained however, for spools and sleeves manufactured of a hardened stainless steel and having a ±.0005 tolerance. This is a larger clearance than is found with typical air valves. It has also been found for this particular combination that it is preferred that the air utilized by the air valve is non-lubricated air.

In order to activate the fluid valve 14 as the piston 20 approaches the top or bottom of the piston chamber 18, and consequently as the drive shaft 22 approaches the ends of its stroke, the motion of the drive shaft is transmitted to the valve spool 26 via a shifter assembly 80. The shifter assembly 80 includes a shifter rod 82 which is threadably attached to the valve spool 26. The shifter rod 82 extends from the fluid valve 14 and through an opening in the end cap 84 of the shifter assembly 80. The shifter rod 82 is substantially parallel to the drive shaft 22 of the piston engine. The shifter assembly 80 further includes a fork 86, attached to the piston drive shaft 22 and is mounted for limited translation upon the shifter rod 72. For example, a screw 88 extends from an end 90 of the fork to a mid portion 92 of the fork, between these two positions, the fork forms substantially a "C" about the piston drive shaft 22. As the screw 88 mates with the portion 92 of the fork, the "C" of the fork is tightened to grip the drive shaft 22.

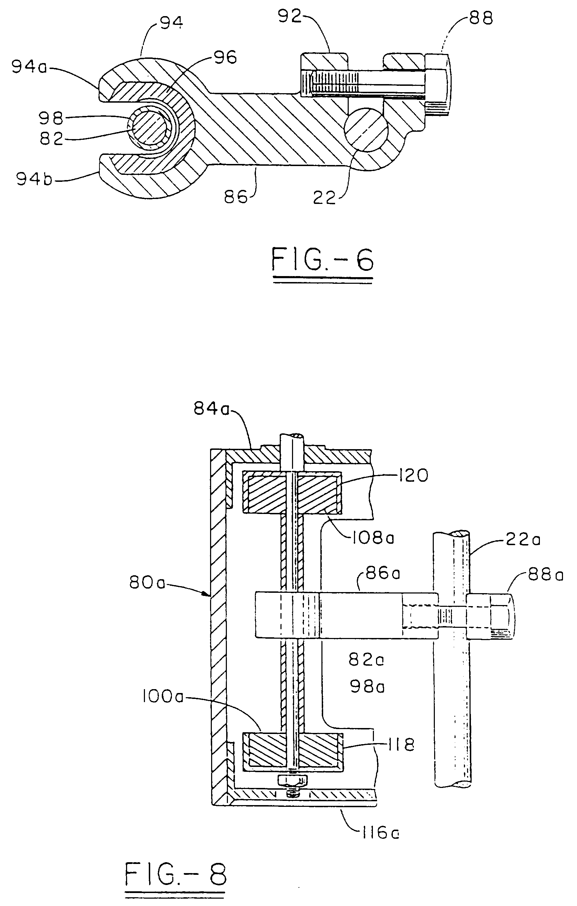

The forked end 94 of the fork 86 carries a magnet 96 which is located in a milled pocket of the fork 86. The magnet 96 is substantially "C" shaped as viewed in Figure 6, wherein the shifter rod 82 and a sleeve 98 are disposed between the tines of the "C". It is preferred that the shifter rod 82 and the sleeve 98 are able to freely slide there through as the valve spool 26 moves in reciprocal motion and allows for the fork 86 to move along the sleeve 98 of the shifter rod 82 in conjunction with the reciprocal motion of the drive shaft 22. It is therefore preferred that the sleeve 98 is spaced apart from the tines of the fork and magnet 96 so that the fork and the magnet straddle, but do not contact the sleeve 98. It is not recommended that the magnet 96 be allowed to make slidable contact with the sleeve 98. Therefore, it is preferred that the spacing between the tines 94a, 94b of the fork is less than the spacing between the tines of the magnet. In other words, the magnet is spaced further from the sleeve 98 than the fork, so that if the fork comes in contact with the sleeve 98, the magnet will not, thereby preventing wear and/or damage to the magnet.

At the end of the shifter rod 82, farthest from fluid valve 14, is another magnet 100. This magnet is similar to the magnet 96, but instead of being "C" shaped, it is substantially ring like or circular. The magnet 100 is sandwiched between a pair of caps 102, 104 which help prevent physical damage to the magnets. The magnet 100 is secured to the shifter rod by a nut 106 at one end and the interaction of the cap 102 and the sleeve 98 at the other end.

Between the end cap 84 and the fork 86 is a third magnet 108 which is similar to the magnet 100. Again, the magnet 108 is sandwiched between two caps 110, 112 and are secured to the shifter rod 82 by a shoulder 114 of the shift rod 82 at one end and the sleeve 98 of the shifter rod at the other.

The magnets 96, 100, 108 are permanent magnets. If fluid pressure piston engine assembly is to be used to pump hot melt adhesives, it is preferred that the permanent magnets be of a samarian cobalt, SM₂CO₁₇, magnet construction. This is because it is well known that heat can affect the magnetic strength of a permanent magnet. Therefore, the choice of a permanent magnet for the pumping of hot melt adhesives must be able to withstand the temperatures commonly experienced in the heating and melting of such hot melt adhesives. For example, in a hot melt adhesive system, it could be expected that the shifter could be exposed to temperatures from about (200° F) 93.3° C to about (350° F) 177° C. Samarian cobalt magnets, typically operate well at temperatures below (450° F) 232° C. Therefore, if this embodiment is to be used in-the dispensing of hot melt adhesives, then it is believed that samarian cobalt magnets are preferred.

Each permanent magnet produces its own associated field of flux. The interaction of these fields is important to the effectiveness of the shifting. In order to provide smooth shifting in either direction, it is preferred that the shifter magnets 100, 108 are substantially the same size and configuration. In like manner, the fork magnet 96 is similar to the shifter magnets 100, 108. The forked magnet 96 could be circular with the shifter rod 82 and sleeve 96 passing through its center. Such a configuration is more difficult to assemble and disassemble. However, by providing a slot in a circular configuration, the fork magnet retains substantially the same circular configuration while allowing the shifter rod 82 and sleeve 96 to be easily disengaged from the fork, thereby facilitating assembly and disassembly.

In that ferro-magnetic materials can affect the field (either focusing or distorting it) of a magnet, shifter rod 82, its associated sleeve 98, and the fork 86 should be of a non-magnetic material. For example, a passivated stainless steel may be used, such as 300 series stainless steel, for other non-magnetic materials such as aluminum, brass, etc. Similarly, it is believed that it is preferred that the magnet caps 102, 104, 110, and 112 associated with each respective magnet be also of a non-ferro-magnetic material.

Due to the presence of the magnetic fields, it is preferred that the valve spool 26 and the sleeve 28 of the fluid valve are also manufactured from a non-magnetic material or of a material which is only somewhat magnetic, such as a hardened stainless steel. For example, valve spools and sleeves of stainless steel having a 45 - 55 Rockwell "C" rating work well for hot melt applications. This prevents the possibility that one or both of these parts could become magnetized, thereby preventing or hindering the sliding movement of the valve spool 26 within the sleeve 28, and thus interfering with the direction of the flow of air to and from the piston chamber 18. In such embodiment, the housing 30 was aluminum and there were a plurality of o-rings 31 to accommodate the expansion and contraction of the two dissimilar metals.

On the other hand, certain elements of the assembly should be of a ferro-magnetic material, so as to aid in the directing of the magnetic field so that it can be more effectively utilized and/or contained. As such, it is preferred that the end caps 84, 116 of the shifter assembly be of a ferro-magnetic material. This also provides a detent mechanism which will be more fully described below.

The polarity of the magnets are arranged such that as the fork magnet 96 is moved toward either of the shifter rod magnets 100, 108, there will be an attraction therebetween. For example, if the shifter rod magnets 100, 108 are installed such that a north pole is located in conjunction with the upper caps 102, 110, respectively, then the fork magnet 96 will have its north pole located towards the upper shifter rod magnet 108. Shifting of the fluid valve 14 is accomplished by bringing the magnet 96 of the fork 86 within close proximity to one of the spool magnets. At some point the attraction between the magnet 96 of the fork 86 and the spool magnet will be great enough to cause the spool magnet, along with the shifter rod 82, and a valve spool 26 to move towards the magnet 96 of the fork. This sliding movement will cause the elements of the valve spool 26 to realign themselves causing the piston to move in the opposite direction.

For example, with reference to Fig. 2, as the drive shaft 22 and the piston 20 approach the end of its stroke, the fork 86 will be moved towards the shifter rod magnet 100. As the force of attraction between fork magnet 96 and the shifter rod magnet 100 increases, it will eventually be great enough to pull the shifter rod magnet 100 towards the magnet 96 of the fork 86. This in turn causes shifter rod 82 and the valve spool 26 to be moved in the same direction, such as is illustrated in Fig. 3. Once shifted, the fluid valve 14 redirects the air flow as described above such that the direction of motion of the drive shaft 22 and its associated piston 20 is reversed. This in turn moves the fork 86 towards the other shifter rod magnet 100. Again, as the drive shaft and piston approach the end of a stroke, the attraction between the magnet 96 of the fork and the magnet 108 of the shifter rod 82 will cause the magnet 108 to move towards the fork 86. This in turn causes the fluid valve 14 to shift, thereby reversing the flow of air and returning the assembly to that as illustrated in Fig. 2. By properly positioning and sizing the various magnets, the shifting of fluid valve 14 may be accomplished as a non-contact operation. In other words, the magnets of the shifter rod may become adjacent to, but do not contact the magnet of the fork. A non-contact operation should have improved wear characteristics, and, therefore, improved durability over previous designs. Furthermore, by keeping the magnets spaced a predetermined distance apart, the force required to separate the magnets will be less than if they were in a contact position. Also, in that the force exerted on or between the respective magnets increases as the magnets are brought closer and closer together during the stroke of the piston and the drive shaft, there is less likelihood that the fluid valve will be prevented from shifting, which in turn produces a less likelihood that the pump will stall.

In prior art air valves, it is common for various contaminants, such as varnish like substances, to accumulate within the air valve so that more and more force is required to shift the air valve completely from one position to the other. Some shifter assemblies exert the greatest amount of force at the beginning of the shift and taper off to a lesser force as the shifting process is completed. For example, a shifter utilizing a spring will work in this manner because the spring's force is typically the greatest at the beginning of the shift. In such shifters, there may be enough force to overcome the contaminants and cause the valve to begin to shift. However, as the force of the shifter diminishes as the air valve moves, it is possible that the force will diminish to a point were it will not be able to overcome the resistive force caused by the contaminants. This results in the air spool failing to completely move from one position to the other. This, in turn, causes the pump to stall.

With reference to Figure 2, the shifting force exerted by the shifter on the air valve increases as the shifter moves from one position to another. For example, as the magnet 96 carried by the force 86 moves from its lower position (as oriented with reference to Figure 2) near magnet 100, the force of attraction continuously increases between it and the upper magnet 108. At some point, the force of attraction between the magnets 108 and 96 will become so great that the spool, shifter rod, and the magnet 108 will begin to move downward. Once they begin to move downward, they should continue to shift because the force drawing them downward continuously increases until the air valve has completely shifted downward and the fork has reached its most upward portion of the stroke. Therefore, once the air valve begins to move, there is a much greater probability that the shift will be completed because the force of attraction is increasing, thereby being less sensitive to the build-up of contaminants.

The interaction between the magnets 100, 108 of the shifter rod 82 with the respective end cap 84, 116 provide a detent in order to prevent the shifter and the fluid valve from moving from one position to another as the fork moves between the shifter rod magnets. Therefore, whichever shifter rod magnet is located closest to its respective end cap, the force of attraction therebetween should be strong enough to prevent inadvertent movements of the shifter and the fluid valve, but not strong enough to prevent the shifter rod magnet from moving towards the magnet of the fork at the time of shifting.

Alternatively, the "C" magnet may be replaced with two parallel bar magnets. The shifter rod would pass between the spaced apart magnets similar to the slot in the "C" magnet of the fork. In this alternate embodiment, the length of the bar magnets must have a longer dimension than the outer diameter of the shifter rod magnets. This embodiment provides a means for reducing or eliminating side loading which may be associated with the shifter rod. With ring magnets and "C" magnets, side loading of the shifter rod may occur due to misalignment between the shifter rod magnet and the fork magnet. This misalignment can result from tolerance differences which cause the physical parts to be misaligned, or from differences wherein the magnetic center of the magnet varies from its geometric center. If there is a misalignment between the "C" shaped magnet and a ring magnet, then they will tend to resist any force that tries to move them out of, or hold them out of, their true magnetic alignment. For example, if the fork magnet and the shifter rod magnets are held out of magnetic alignment by their connections to the pump piston and the air valve respectively, they will exert a force on these components, in the form of a side load, which in turn can cause increased friction and wear to these components. Providing a means for allowing the fork magnet and magnet shaft magnets to move into magnetic alignment will eliminate this problem. The slot formed by the bar magnets provides an adjustment which allows the ring magnet of the shifter rod to compensate for any misalignment between it and the magnet 96 of the fork.

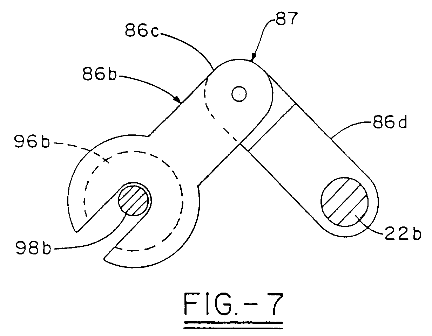

Alternately, with reference to Figure 7, the one piece fork may be replaced with a two piece fork 86b, in which members 86c and 86d are connected together by a hinge 87. The connection of the fork 86b to the drive shaft 22b is changed to allow it to pivot about the shifter rod. This allows the "C" shaped fork magnet 96b the freedom to swing in an arc about the shifter rod and position itself within the shifter rod so that it can magnetically align itself with the shifter rod magnet and thus eliminate or reduce side loading.

Also, since the fork magnet has less cross-sectional area due to the hole and slot for the shifter rod, its magnetic center is not necessarily the circular center of the magnet. Therefore, it is believed to be preferable to position the shifter rod at the magnet's centroid.

Spacing the fork and its associated magnet from the sleeve 98 and shifter rod 82 provides as an aid in trouble shooting the system. For example, if the pump was to stall, the air valve may be manually activated by pushing on either the end 26a of the spool 26 or the end 82a of the shifter rod 82. If the air valve moves freely, then the stall was probably not the result of the air valve. In other prior art shifters, it is necessary to first physically disconnect the shifter from the pump drive shaft, which can be difficult and time consuming.

With reference to Figure 8, there is illustrated a cross-sectional view of an alternate shifter assembly 80a. In this arrangement, the fork 86a is of a ferro-magnetic material and does not contain a fork magnet. The fork 86a is attached to the drive shaft 22a of the piston as before. The shifter rod magnets 100a, 108a are mounted in steel cups 118, 120 respectively to contain the lines of flux and increase the force of attraction between the shifter rod magnets and the ferro-magnetic fork 86a. As before, as the drive shaft 22a of the piston reaches the end of a stroke, the fork 86a approaches one of the shifter rod magnets. As the gap between the fork 86a and a shifter rod magnet decreases, the force of attraction will increase. This force of attraction will increase until the shifter rod magnet is pulled toward the fork 86a. Thus shifting the fluid valve 14 to cause the air directed in the piston chamber to be reversed, thereby reversing the direction of the piston and the drive shaft 22a.

## Claims

1. An assembly comprising:
a fluid valve (14) having an inlet (24) for coupling to a source of fluid under pressure, first and second discharge outlets (34, 36), and a valve spool (26) translatable between a first and second position such that in the first position the inlet is coupled to the first discharge outlet and in the second position the inlet is coupled to the second discharge outlet, a shifter (80) including a shifter rod (82) coupled to the valve spool (26), and a means adapted for coupling to a shaft of a piston engine (12), for causing the shifter rod to move from either a first position relative to the valve spool to a second position or from the second position relative to the valve spool to the first position, wherein coupling of the inlet to a discharge outlet of the fluid valve is shifted from either the first to the second outlet or from the second to the first outlet,
characterized in that:
a pair of diametrically opposed magnets (100, 108) is carried by the shifter rod (82), and the means adapted for coupling to a shaft (22) of a piston engine being movable between said magnets.

2. The assembly of claim 1 wherein the means includes a ferro-magnetic portion disposed between the pair of magnets.

3. The assembly of claim 1 wherein the means includes a magnet (96) disposed between the pair of magnets of the shifter rod; and
a means for compensating for magnetic misalignments between at least one of said magnets carried by the shifter rod and said magnet disposed between a pair of magnets of the shifter rod.

4. The assembly of claim 3 wherein said means for compensating is a hinge means (87).

5. The assembly of claims 1 or 3 wherein each magnet (100, 108) of the shifter rod (82) has a first pole face oriented toward the magnet carried by the bar means and a second pole face distal therefrom and further comprising:
a detent means for retaining the shifter rod in either the first or second portions until the means causes the shifter rod to change positions and wherein the detent means includes a ferro-magnet plate (84, 116) spaced from the second pole face of each of the magnets of the shifter rod.

6. The assembly of any of the above claims further comprising:
a fluid pressure operated piston engine (12) including a piston chamber (18), a piston (20) reciprocable in the chamber, a drive shaft (22) attached to the piston and reciprocable therewith through a drive shaft stroke having a first and a second end, a means for coupling the first and second discharge outlets of the fluid valve to a first and second portion of the piston chamber, respectively, of its stroke; and wherein said means of the shifter is coupled to the piston engine drive shaft such that as the drive shaft approaches each end of its stroke, fluid is coupled to a portion of the piston chamber to effect reversal of the direction of travel of the drive shaft.

7. The assembly of claim 6 wherein the means or the shifter comprises:
a bar means (86) attached at a first end to the piston drive shaft and mounted for slidable movement with respect to the shifter rod (82) at a second end; and
said magnet (96) of said means is carried by the second end of the bar means for movement between the shifter rod magnets (100, 108) such that as the piston engine drive shaft reaches the end of a stroke, the force of attraction between the magnet of the bar means and that of one of the magnets of the shifter rod causes the shifter rod to shift from one position to another, which in turn causes the air valve (14) to move from one position to another wherein the air flow to the piston chamber causes a reversal of the direction of travel of the drive shaft.

8. The assembly of claim 6 wherein the fluid valve means (14) is capable of being manually operated, independent of the piston engine (12), without decoupling the second means.

9. The assembly of claim 7 wherein said bar means (86) is substantially a fork having tines; wherein the magnet of the bar means is substantially a "C" in cross-section; and wherein the opening of the magnet and tines of the fork straddle the shifter rod (82); and wherein said for further comprises first and second portions hingably connected together.

10. The assembly of any of claims 1 to 9 for pumping heated adhesives comprising:
a pump (12) including a piston chamber (18), a piston (20) reciprocable in the chamber, and a pump shaft (22) attached to the piston and reciprocable therewith through a pump shaft stroke having a first end and a second end,
said air valve (14) being mounted externally from the piston chamber (18), capable of operating at temperatures of at least 170°C (350°F), for coupling air under pressure to alternative portions of the piston chamber, and including a valve spool (26) disposed within a valve sleeve (28) and mounted for translatable movement between said first and said second positions, said valve spool having a stepped outer surface having a plurality of larger diameter portions, the larger diameter portions having a 12,5 mm (1/2 inch) diameter and a tolerance of about 0,01 mm (.0005 inches);
said shifter (80) being mounted externally from the piston chamber (18), capable of operating at temperatures of at least 170°C (350°F), including said shifter rod (82) attached to the valve spool, the diametrically opposed magnets (100,108) of which comprising samarian cobalt, carried by the shifter rod,
and wherein the valve spool and the valve sleeve comprise hardened stainless steel and said valve sleeve being disposed within a housing (30) of aluminium and having a means for accomodating the expansion and contraction between the housing and the sleeve.

## Patentansprüche

1. Anordnung umfassend:
ein Fluidventil (14) mit einem Einlaß (24) zum Verbinden mit einer Druckfluidquelle, erste und zweite Austrittsöffnungen (34, 36) und einen Ventilsteuerkolben (26), der zwischen einer ersten und zweiten Position verschiebbar ist, so daß der Einlaß in der ersten Position mit der ersten Austrittsöffnung verbunden ist und der Einlaß in der zweiten Position mit der zweiten Austrittsöffnung verbunden ist, wobei eine Schiebeeinrichtung (80) eine mit dem Ventilsteuerkolben (26) verbundene Schiebestange (82) und ein zum Verbinden mit einer Welle einer Kolbenmaschine (12) angepaßtes Mittel zum Bewirken des Bewegens der Schiebestange von entweder einer ersten Position in bezug auf den Ventilsteuerkolben in eine zweite Position oder von der zweiten Position in bezug auf den Ventilsteuerkolben in die erste Position umfaßt, wobei die Verbindung des Einlasses mit einer Austrittsöffnung des Fluidventiles von entweder dem ersten zum zweiten Austritt oder vom zweiten zum ersten Austritt umgeschaltet wird,
gekennzeichnet dadurch, daß:
ein Paar diametral gegenüberliegender Magnete (100, 108) durch die Schiebestange (82) getragen wird und das zum Verbinden mit einer Welle (22) einer Kolbenmaschine angepaßte Mittel zwischen den Magneten bewegbar ist.

2. Anordnung nach Anspruch 1, bei der das Mittel ein zwischen dem Paar der Magneten angeordnetes ferromagnetisches Teil umfaßt.

3. Anordnung nach Anspruch 1, bei der das Mittel einen zwischen dem Paar der Magneten der Schiebestange angeordneten Magneten (96) ; und
ein Mittel zum Kompensieren von magnetischen Versetzungen zwischen mindestens einem der durch die Schiebestange getragenen Magneten und dem zwischen einem Paar der Magneten der Schiebestange angeordneten Magneten umfaßt.

4. Anordnung nach Anspruch 3, bei der das Mittel zum Kompensieren ein Gelenkmittel (87) ist.

5. Anordnung nach Anspruch 1 oder 3, bei der jeder Magnet (100, 108) der Schiebestange (82) eine erste Polfläche, die zu dem durch das Stangenmittel getragenen Magneten orientiert ist, und eine zweite Polfläche besitzt, die distal davon entfernt ist, und außerdem umfaßt:
ein Arretiermittel zum Festhalten der Schiebestange entweder in der ersten oder zweiten Position, bis das Mittel die Schiebestange veranlaßt, die Positionen zu wechseln, und bei der das Arretiermittel eine ferromagnetische Platte (84, 116) umfaßt, die von der zweiten Polfläche jedes Magneten der Schiebestange beabstandet ist.

6. Anordnung nach einem der obigen Ansprüche, die außerdem umfaßt:
eine fluiddruckbetätigte Kolbenmaschine (12) einschließlich einer Kolbenkammer (18), eines in der Kammer hin- und herbewegbaren Kolbens (20), einer an dem Kolben befestigten und mit diesem durch einen Antriebswellenhub mit einem ersten und einem zweiten Ende ihres Hubes hin- und herbewegbaren Antriebswelle (22), eines Mittels zum Verbinden der ersten und zweiten Austrittssöffnungen des Fluidventiles mit einem ersten bzw. zweiten Teil der Kolbenkammer; und bei der das Mittel der Schiebeeinrichtung mit der Kolbenmaschinenantriebswelle verbunden ist, so daß, wenn die Antriebswelle jeweils ein Ende ihres Hubes erreicht, das Fluid mit einem Teil der Kolbenkammer verbunden wird, um die Umkehr der Bewegungsrichtung der Antriebswelle zu bewirken.

7. Anordnung nach Anspruch 6, bei der das Mittel oder die Schiebeeinrichtung umfaßt:
ein Stangenmittel (86), das an einem ersten Ende mit der Kolbenantriebswelle verbunden ist und zur Gleitbewegung in bezug auf die Schiebestange (82) an einem zweiten Ende befestigt ist; und der Magnet (96) des Mittels durch das zweite Ende des Stangenmittels zur Bewegung zwischen den Schiebestangenmagneten (100, 108) getragen wird, so daß, wenn die Kolbenmaschinenantriebswelle das Ende eines Hubes erreicht, die Anziehungskraft zwischen dem Magneten des Stangenmittels und jenem einen der Magneten der Schiebestange das Verschieben der Schiebestange aus einer Position in die andere bewirkt, was wiederum das Bewegen des Luftventiles (14) aus einer Position in die andere bewirkt, wobei der Luftstrom zu der Kolbenkammer eine Umkehr der Bewegungsrichtung der Antriebswelle bewirkt.

8. Anordnung nach Anspruch 6, bei der das Fluidventilmittel (14) unabhängig von der Kolbenmaschine (12) ohne Entkuppeln des zweiten Mittels manuell betätigt werden kann.

9. Anordnung nach Anspruch 7, bei der das Stangenmittel (86) im wesentlichen eine Gabel mit Zinken ist; bei der der Magnet des Stangenmittels im Querschnitt im wesentlichen ein "C" ist; und bei dem die Öffnung des Magneten und die Zinken der Gabel die Schiebestange (82) überspreizen; und bei der die Gabel außerdem erste und zweite, gelenkig miteinander verbundene Teile umfaßt.

10. Anordnung nach einem der Ansprüche 1 bis 9 zum Pumpen erwärmter Kleber, umfassend:
eine Pumpe (12) einschließlich einer Kolbenkammer (18), eines in der Kammer hin- und herbewegbaren Kolbens (20) und einer an dem Kolben befestigten und durch einen Pumpenwellenhub mit einem ersten Ende und einem zweiten Ende mit diesem hin- und herbewegbaren Pumpenwelle (22),
bei der das Luftventil zum Verbinden von Druckluft mit wechselnden Teilen der Kolbenkammer (14) außerhalb der Kolbenkammer (18) angeordnet und in der Lage ist, bei Temperaturen von mindestens 170°C (350°F) zu arbeiten, und einen Ventilsteuerkolben (26) umfaßt, der in einer Ventilbuchse (28) angeordnet und zur Längsverschiebung zwischen den ersten und zweiten Positionen aufgenommen ist, wobei der Ventilsteuerkolben eine abgestufte Außenfläche mit einer Vielzahl von durchmesservergrößerten Teilen besitzt, die durchmesservergrößerten Teile einen Durchmesser von 12,5 mm (1/2 inch) und eine Toleranz von ungefähr 0,01 mm (0.0005 inch) besitzen;
wobei die Schiebeeinrichtung (80), die außerhalb der Kolbenkammer (18) angeordnet ist, bei Temperaturen von mindestens 170 °C (350 °F) arbeiten kann, und die an dem Steuerkolben befestigte Schiebestange (82) umfaßt, deren diametral gegenüberliegenden, durch die Schiebestange getragenen Magneten (100, 108) Samariumkobalt enthalten,
und bei der der Ventilsteuerkolben und die Ventilbuchse gehärteten nichtrostenden Stahl enthalten und die Ventilbuchse in einem Gehäuse (30) aus Aluminium angeordnet ist und ein Mittel zum Ausgleichen der Ausdehnung und Zusammenziehung zwischen dem Gehäuse und der Buchse besitzt.

## Revendications

1. Assemblage comprenant :
une soupape (14) actionnée par un fluide, possédant un orifice d'entrée (24), permettant de coupler des premier et second orifices de dégagement (34, 3) à une source de fluide sous pression, et un distributeur (26) mobile en translation entre une première et une seconde position de sorte que dans la première position, l'orifice d'entrée est couplé au premier orifice de dégagement et dans la seconde position, l'orifice d'entrée est couplé au second orifice de dégagement, un dispositif de déplacement (80) incluant une tige de déplacement (82) couplée au distributeur (26), et un moyen adapté pour se coupler à l'arbre d'un moteur à piston (12), pour forcer la tige de déplacement à se déplacer soit d'une première position par rapport au distributeur vers une seconde position, soit de la seconde position par rapport au distributeur vers la première position, de sorte que le couplage de l'orifice d'entrée à un orifice de dégagement de la soupape actionnée par un fluide est déplacé soit du premier orifice de sortie vers le second, soit du second orifice de sortie vers le premier,
caractérisé en ce que :
une paire d'aimants diamétralement opposés (100, 108) est portée par la tige de déplacement (82), et le moyen adapté pour se coupler à un arbre (22) d'un moteur à piston est mobile entre lesdits aimants.

2. Assemblage selon la revendication 1 dans lequel le moyen inclut une partie ferromagnétique disposée entre la paire d'aimants.

3. Assemblage selon la revendication 1 dans lequel le moyen inclut un aimant (96) disposé entre la paire d'aimants de la tige de déplacement ; et
un moyen de compensation des défauts d'alignement magnétique entre au moins l'un desdits aimants porté par la tige de déplacement et ledit aimant disposé entre une paire d'aimants de la tige de déplacement.

4. Assemblage selon la revendication 3 dans lequel ledit moyen de compensation est un moyen d'articulation (87).

5. Assemblage selon la revendication 1 ou 3 dans lequel chaque aimant (100,108) de la tige de déplacement (82) possède une première surface de pôle orientée vers l'aimant porté par le moyen de barre et une seconde surface de pôle éloignée de la première, assemblage comprenant en outre :
un moyen d'arrêt pour retenir la tige de déplacement soit dans la première, soit dans la seconde position jusqu'à ce que le moyen force la tige de déplacement à changer de position et dans lequel le moyen d'arrêt inclut une plaque ferromagnétique (84, 116), espacée de la seconde surface de pôle de chacun des aimants de la tige de déplacement.

6. Assemblage selon l'une quelconque des revendications précédentes comprenant en outre:
un moteur à piston (12) commandé par la pression d'un fluide incluant une chambre de piston (18), un piston (20) dont le mouvement est alternatif dans la chambre, un arbre de commande (22) fixé au piston et dont le mouvement est également alternatif durant la course de l'arbre de commande, cette course ayant une première et une seconde extrémité, un moyen pour coupler le premier et le second orifice de dégagement de la soupape actionnée par un fluide à une première et à une seconde partie de la chambre du piston, respectivement de sa course; et dans lequel ledit moyen du dispositif de déplacement est couplé à l'arbre de commande du moteur à piston de sorte que lorsque l'arbre de commande s'approche de chaque extrémité de sa course, le fluide est couplé à une partie de la chambre du piston pour effectuer l'inversion du sens du déplacement de l'arbre de commande.

7. Assemblage selon la revendication 6 dans lequel le moyen ou le dispositif de déplacement comprend :
une barre (86) fixée à une première extrémité à l'arbre de commande du piston et montée à une seconde extrémité pour effectuer un mouvement de coulissement par rapport à la tige de déplacement (82) ; et ledit aimant (96) de ladite barre est porté par la seconde extrémité de la barre pour effectuer un mouvement entre les aimants de la tige de déplacement (100, 108), de sorte que lorsque l'arbre de commande du moteur à piston atteint l'extrémité d'une course, la force d'attraction entre l'aimant de la barre et l'un des aimants de la tige de déplacement entraîne le déplacement de la tige de déplacement d'une position vers l'autre, ce qui à son tour entraîne le déplacement de la soupape à air (14) d'une position vers l'autre, si bien que le flux d'air de la chambre du piston entraîne une inversion du sens du déplacement de l'arbre de commande.

8. Assemblage selon la revendication 6 dans lequel la soupape (14) actionnée par un fluide peut être actionnée manuellement, indépendamment du moteur à piston (12), sans découpler le second moyen.

9. Assemblage selon la revendication 7 dans lequel la barre (86) est essentiellement une fourche possédant des dents; dans lequel l'aimant de la barre a essentiellement la forme d'un "C" en coupe transversale et dans lequel l'ouverture de l'aimant et les dents de la fourche chevauchent la tige de déplacement (82); et dans lequel ladite fourche comprend en outre des première et seconde parties connectées ensemble au moyen d'une charnière.

10. Assemblage selon l'une quelconque des revendications 1 à 9 pour pomper des adhésifs chauffés comprenant :
une pompe (12) incluant une chambre de piston (18), un piston (20) dont le mouvement est alternatif dans la chambre, et un arbre de pompe (22) fixé au piston et dont le mouvement est également alternatif durant une course de l'arbre de pompe, cette course ayant une première et une seconde extrémité, ladite soupape à air (14) étant montée à l'extérieur de la chambre de piston (18), étant capable de fonctionner à des températures d'au moins 170_C (350_F), pour coupler de l'air sous pression à des parties alternatives de la chambre de piston, et incluant un distributeur (26) disposé à l'intérieur d'un manchon de soupape (28) et monté pour effectuer un mouvement de translation entre ladite première position et ladite seconde position, ledit distributeur possédant une surface extérieure en gradins ayant plusieurs parties de diamètre plus large, les parties de diamètre plus large ayant un diamètre de 12,5 mm (1/2 inch) et une tolérance d'environ 0,01 mm (.0005 inches),
ledit dispositif de déplacement (80) étant monté à l'extérieur de la chambre de piston (18), étant capable de fonctionner à des températures d'au moins 170_C (350_F), incluant ladite tige de déplacement (82) fixée au distributeur, les aimants diamétralement opposés (100, 108) de cette tige comprenant du samarium cobalt, et étant portés par la tige de déplacement,
et dans lequel le distributeur et le manchon de soupape comprennent de l'acier inoxidable trempé, ledit manchon de soupape étant disposé à l'intérieur d'un logement (30) en aluminium et possédant des moyens pour ajuster l'extension et la contraction entre le logement et le manchon.
